# EUROPEAN PATENT SPECIFICATION

(11) **EP 2 032 242 B1**
(45) Date of publication and mention of the grant of the patent: **01.10.2014**
(21) Application number: 07784573.3
(22) Date of filing: 28.05.2007
(51) Int. Cl.: B01F 17/08

(54) **A SURFACE ACTIVE INGREDIENT COMPOSITION**
ZUSAMMENSETZUNG MIT OBERFLÄCHENAKTIVEN BESTANDTEILEN
COMPOSITION D'INGREDIENTS TENSIOACTIVE

(43) Date of publication of application: 11.03.2009
(73) Proprietor: Marine 3 Technologies Holdings (Pty) Ltd, 1709 Roodepoort (ZA)
(72) Inventor: DU PLESSIS, Andries, 1709 Roodepoort (ZA)
(74) Representative: Pidgeon, Robert John
(86) International application number: PCT/ZA2007/000032
(87) International publication number: WO 2007/137307

(56) References cited:
- GB-A- 2 136 855
- GB-A- 2 174 438
- US-A- 3 786 003
- US-A- 5 550 100
- US-A1- 2005 003 967
- ADIBHATLA B ET AL: "Effect of surfactants on wettability of near-wellbore regions of gas reservoirs", JOURNAL OF PETROLEUM SCIENCE AND ENGINEERING, ELSEVIER, AMSTERDAM, NL, vol. 52, no. 1-4, 1 June 2006 (2006-06-01) , pages 227-236, XP025115471, ISSN: 0920-4105, DOI: 10.1016/J.PETROL.2006.03.026 [retrieved on 2006-06-01]

## Description

### Field of the Invention

This invention relate to a surface active ingredient composition.

The invention relates particularly to a surface active ingredient composition that can be added to a particle containing liquid for neutralizing steric charges acting on the particles in the liquid and thereby reducing cohesive forces induced by the particles in the liquid. The invention extends also to a process for manufacturing such a composition.

### Background to the Invention

It is known in relation to various processes involving a particle containing liquid, where the parties cause increased surface tension and interfacial tension to act within the liquid, that it is beneficial to neutralize steric charges acting on the particles, thus resulting in the reduction of cohesive forces acting between the particles. This applies, for example, in relation to processes where wetting of particles is required, thus including processes where emulsification must occur and processes where deflocculation is a consideration.

Neutralising of steric charges acting on particles in a liquid and the resulting reduction of cohesive forces acting on the particles, which generally involves the use of different compositions in relation to different requirements, has proven to be relatively expensive and not always effective, or indeed possible, and it is thus an object of this invention to at least ameliorate the problems that are known to exist in this regard.

GB-A-2136855 describes a micellar slug for use in the recovery of oil, the slug consisting essentially of a hydrocarbon, an aqueous medium, a surfactant, and a cosurfactant, said surfactant containing, as an essential component, an internal olefin sulfonate having 10 to 26 carbon atoms and a disulfonate content of about 20% by weight or less.

GB-A-2174438 describes a micellar slug for use in the recovery of oil, consisting essentially of a surfactant and an aqueous medium, which may contain an inorganic salt, said sur-factant containing:
a) at least one alkoxy sulfonate (as defined), and
b) at least one other surfactant.

US 5,550,100 describes compositions comprising particulates and an effective amount of manganese chloride to reduce significantly the wetting time and/or the dispersion time of the particulates.

US 3,479,285 describes foam producing liquid concentrates which comprise a water soluble alkoxylated alkyl sulfate salt, a C₁₂ to C₁₆ alcohol and preferably a water soluble solvent which is chemically inert to the components of the composition. These compositions when mixed with either fresh or salt water produce a high expansion foam.

US 4,528,105 describes a micelle solution composition for recovering crude oil from petroleum reservoirs which comprises as essential components, a hydrocarbon, brine, and a surface active agent, wherein said surface active agent is a mixture of (a) an ethylene oxide and propylene oxide block polymer, (b) an alkaline earth metal salt of an alkylbenzenesulfonate, (c) a polyoxyethylene alkyl ether sulfate or polyoxyethylene alkylphenol ether sulfate, and (d) a polyoxyethylene nonionic surface active agent other than the agent specified in (a).

### Summary of the Invention

According to a first aspect of the invention there is provided a surface active ingredient composition, which includes
a base liquid in the form of water that has dispersed therein in percentages by volume:
Sodium Chloride - 1 to 3%
Magnesium - 1 to 2%
Calcium - 1 to 2%
Potassium - 1 to 2%
Sulphate - 1 to 2%
Carbon - 0,5 to 1%
Nitrate - 1 to 2% and
Phosphate - 1 to 2%
sodium chloride dissolved in the base liquid; and
sodium alkyl ether sulphate dissolved in the base liquid,
the portion of the base liquid to sodium chloride and sodium alkyl ether sulphate being between 1 : 1 : 1,5 and 1 : 1 : 5.

The above proportion of base liquid to sodium chloride and sodium alkyl ether sulphate preferably is in the order of 1 : 1 : 3.

Insofar s the composition of the base liquid is a composition commonly associated with sea water, the base liquid of the surface active ingredient composition of the invention may be sea water. Where the composition of sea water to be used does not fall within the defined parameters of the base liquid, the composition of the sea water may be adjusted by the addition of and/or the removal of a quantity of any one of the elements of the base liquid as defined.

According to a second aspect of this invention there is provided a process for manufacturing a surface active ingredient composition, in accordance with the first aspect of the invention, which includes
providing the base liquid of the composition;
heating the base liquid to a temperature between 50°C and 100°C;
at the said elevated temperature of the base liquid, through high speed dispersion, dissolving the sodium chloride in the base liquid;
at the said elevated temperature of the base liquid, through high speed dispersion, dissolving the sodium alkyl ether sulphate in the base liquid; and
allowing the composition formed to cool down.

The base liquid preferably is heated to a temperature between 80°C and 90°C, at which temperature the sodium chloride and the sodium alkyl ether sulphate is thus dissolved in the base liquid.

Where the base liquid of the composition being manufactured is sea water, the process of the invention may include adjusting the composition of the sea water by the addition of and/or the removal of a quantity of any one of the elements of the base liquid as defined, in order to provide the base liquid as defined. Where the base liquid is not sea water, the base liquid may be formed by mixing, through high speed dispersion, the elements of the base liquid in a volume of water.

The surface active ingredient composition of the invention may include also caustic soda in a quantity making up in the order of 0,1% of the volume of the composition manufactured, the caustic soda being mixed into the composition being manufactured through high speed dispersion. The use of caustic soda particularly is required where micro-organisms that can affect the use of the composition exist within the composition formed, the caustic soda serving to convert the micro-organisms to soap.

Where caustic soda is included in the composition, following cooling down of the composition, the pH of the composition may be neutralized by the addition of a suitable acid to the composition, e.g. hydrochloric acid.

The composition of the invention manufactured in accordance with the process as defined, hence provides a fully activated and saponified alkali alkyl sulphate product which, it is submitted, can act on particles within liquids which are responsible for increased water surface tension, to neutralize steric charges on these particles and to reduce the cohesive forces which are caused by the particles. This is referred to in more detail hereafter.

The process for manufacturing surface active ingredient composition as defined particularly provides for a concentrated composition and for use in associated with particular requirements or applications, the composition is suitably diluted, the concentrated composition typically forming in the order of 0,5% of a diluted composition used. The concentrated composition particularly is diluted in water.

According to a further aspect of the invention, there is provided the use of a surface active ingredient composition as described above as one or more of a wetting, emulsification, and de-agglomeration agent.

The surface active ingredient composition may be used in one or more of the following industries:
- Metals, including ore frothing, and cutting and milling;
- Casting including rust and scale removal, and plating;
- Paper including pulp treatment, paper machine, and calendar;
- Paint and protective coatings including pigment preparation and latex paints;
- Waxes and polishes;
- Petroleum production products including drilling fluids;
- Working of producing wells including producing wells, secondary recovery, and refined products;
- Textiles including preparation of fibres, dyeing and printing, and finishing of textiles;
- Agriculture including phosphate fertilizers and spray application;
- Building and constructions including paving and concrete;
- Elastomers and plastics including emulsion polymerization, foamed polymers, latex adhesive, plastic coating and laminating, and plastic articles;
- Food and beverages including food processing plants, fruits and vegetables, bakery, ice-cream, crystallization of sugar, and fats and oils;
- Industrial cleaning including janitorial supplies, descaling, and soft goods; and
- Leather including skins, tanning, hides, and dyeing.

The specific description which follows is an integral part of the disclosure of the invention and should be interpreted broadly where the context permits this.

### Specific Description of Examples of the Invention

The invention will now be illustrated by way of non-limiting examples.

### Example 1

An example of a surface active ingredient composition, in accordance with the first aspect of this invention, and a process for manufacturing this composition, in accordance with the second aspect of this invention, are described hereafter.

An example of a surface active ingredient composition, in accordance with the first aspect of this invention, includes sea water as a base liquid, the base liquid having sodium chloride, sodium alkyl ether sulphate and caustic soda dissolved therein and having its pH neutralized with a suitable acid such as hydrochloric acid.

The sea water has dispersed therein, in percentages by volume:
Sodium Chloride - 1 to 3%
Magnesium - 1 to 2%
Calcium - 1 to 2%
Potassium - 1 to 2%
Sulphate - 1 to 2%
Carbon - 0,5 to 1%
Nitrate - 1 to 2% and
Phosphate - 1 to 2%

Insofar as the composition of the available water may not fall within these parameters, the composition of the sea water may be adjusted to do so, particularly by adding necessary elements or reducing necessary elements, as may be required. It is envisaged in this regard also that a base liquid can be formed merely by dispersing into ordinary water the elements as above defined in the quantities indicated.

The proportion of base liquid to sodium chloride and sodium alkyl ether sulphate, for one particular application of the sulphur active ingredient composition, is in the order of 1: 1 : 3, the caustic soda making up approximately 0,1% of the volume of the composition.

The surface active ingredient composition is manufactured by providing a base liquid including the elements defined in the quantities defined and then heating the base liquid to a temperature between 80°C and 90°C, at which temperature the sodium chloride, the sodium alkyl ether sulphate and the caustic soda is dissolved in the base liquid, particularly by a high speed dispersion process.

Following this manufacturing process, the composition is allowed to cool down and is the neutralized with the aid of hydrochloric acid.

It must be appreciated that the exact formulation of the surface active ingredient composition as described is variable and particularly is determined by the applications for which it is intended to be used. The surface active ingredient composition as described also constitutes a concentrated composition and for use in conjunction with particular applications is diluted in water, the composition typically forming in the order of 0,5% of a diluted composition.

The caustic soda component of the composition is provided for converting micro-organisms within the sea water to soap and where such micro-organisms do not exist, the addition of the caustic soda and the resulting neutralization of the composition clearly will not be required.

The surface active ingredient composition, in its diluted form, is particularly suitable for use in conjunction with particle containing liquids, the addition of the composition to such liquids providing for a reduction in liquid surface and interfacial tensions caused by the particles within the liquids, hence providing for effective wetting of these particles and, where required, emulsification of the liquids. The reduction of liquid surface and interfacial tensions particularly is achieved by neutralizing steric charges acting on the particles contained within liquids, which in turn result in the cohesive forces acting between the particles to be reduced.

The surface active ingredient composition thus comprises an activated and saponified alkali alkyl sulphate derived product which, when used in relatively low dosages, can serve a large field of applications including degreasing, the wetting of carbon and graphite dust and pigmenting dust in different applications and the emulsification and effective suspension of particles in liquids in the manufacture of paints, inks, epoxies, and the like. By forming a steric hindrance on pigmenting particles, the composition of the invention will have a substantial impact on reducing milling and grinding requirements, whereas the composition also is usable in conjunction with applications where agglomeration of particles constitutes a problem, the use of the composition serving to reduce agglomeration of particles within liquids in which the particles are suspended.

It must be appreciated that the composition of the invention can be used in relation to applications involving particles such as carbon dust and graphite dust and also in conjunction with oil and solvent based particles where emulsification is a consideration.

The surface active ingredient composition of the invention and as described serves effectively as a wetting agent in conjunction with particle containing liquids and in performing this function serves to reduce surface and interfacial tensions which are required in conjunction with processes involving these liquids.

The surface active ingredient composition of the invention performs its function in an environmentally acceptable manner, requiring relatively small quantities of the composition for fulfilling desired purposes, which also renders the use of the composition extremely cost effective. The versatility of the composition of the invention in relation to different potential applications also is considered a major feature of the composition of the invention.

### Example 2

A product made in accordance with the invention goes by the name Marine 3, which is also referred to herebelow as the product.

Normal tap water contains low quantities of solid salts which are dissolved in the water. The magnetic charges of these salts increase water surface, interfacial tension.

Marine 3 product range neutralizes mentioned charges, which reduce the surface and interfacial tension.
- This increase adhesion of the liquid to a solid particle, which is wetting.
- It allows for water and oil-based droplets to break up in finer globules and to stay in suspension for longer, which is emulsification.
- It also allows for the de-agglomeration or prevention of particles to flocculate, cluster or agglomerate together.

What this means.
- Due to the low percentage of solid salts in tap water, very low dosage is required to neutralize the charges which makes it very feasible, economical and environmental friendly.
- With this technology Marine 3 manage to get a very powerful wetting, emulsification & de-agglomeration at 2:1,000 addition.
   ∘ Wetting of fine and ultra-fine floating dusts, like carbon, graphite, hematite, sulfur and pigmenting dusts.
   ∘ Emulsification of oil-based materials into water, like oil, grease, fat, cream, etc.
   ∘ De-agglomeration of fine & ultra-fine particles in liquid suspensions, like dispersion of pigmenting powders in liquids.
- There are no toxic ingredients used in the composition of the products.
- At the low dosage recommendation and the low percentage of active ingredients in the composition of the products, the products pose no danger and
- are totally environmental friendly.
- The products enhance plant & marine life. This makes it excellent for biological breakdown processes.

### APPLICATIONS

- Agricultural
- General cleaning
- Degreasing
- Hygenic cleaning
- Dust suppression
- Malari & cholera

### AGRICULTURAL

The Products reduces surface tension between particles of different sizes and molecular structure within the prescribed blend.
- Dramatically increases chemical or nutrient absorption by plants and insects.
- Allows complete mixing of all liquids including oils and water.
- Allows penetration into waxy, oily and air filled surfaces and pockets.
- In this case facilitates mixing of urea and humic acid and absorption by plant leaves and stems.

It is compatible with even the most sensitive of products and applications including foodstuffs and cosmetics.

### HERBICIDES

### Background of problems in the market:

- Herbicides do not disperse with ease into water.
- On application, large droplets forms on leafs and herbicide-bearing water ends up in down-stream systems. This is negative to the environment and costly due to the leaching of unused herbicides.
- Oily leafs limit absorption.

### The solution presented by the product

- Using the product as a cost effective water pre-treatment gives optimal wetting to enhance dispersion and absorption by plants resulting in minimum losses into the down-stream system
- Environmental friendly and enhance absorption by the plant

### Applications:

- Herbicides, weed-killers or products which needs to be absorbed by plants.
- Pesticides
- Fertilizer

### FERTILIZER

Fertilizers enhance the natural fertility of the soil or replace the chemical elements taken from the soil by previous crops.
- Chemical fertilizers include one or more of the three elements that are most important in plant nutrition: nitrogen, phosphorus, and potassium.
- Of secondary importance are the elements sulfur, magnesium, calcium, and micro elements.

Most nitrogen fertilizers are obtained from synthetic ammonia; this chemical compound (NH₃) is used either as a gas or in a water solution, or it is converted into salts such as ammonium sulfate, ammonium nitrate, and ammonium phosphate.

These materials in powder form, do not mix with water and floats on the surface.
- Aggressive agitation is required to disperse them into water.
- Flock and agglomeration chains are formed which has to be broken down by the plant. Water, pre-treated with the Products has got a wetting & emulsification ability with de-agglomeration to disperse these materials and prevent (NH3) formation.
- The chain remains on (NH2) which can be taken up by the plant.

### Background of problems in the market:

- Fertilizer and pesticides do not disperse easily into normal tap water.
- Fertilizer and pesticides blended in untreated water forms large droplets on plant leaf. This limits absorption by plants to the surface of the droplet and the droplet runs down ending up in down-stream systems at a cost.
- These products flock when in water suspension which makes it difficult to be absorbed.

The solution presented by the product
- Pre-treatment of water with the product will wet and disperse fertilizer, humic acid and pesticides in the water.
- Due to enhanced absorption Large enhancement to plant growth is realised.
- Enhanced dispersion at large are realised during mixing with required suspension.
- The emulsification ability allows for leaf absorption on oily leafs.
- Water was pre-treated with the product to disperse Humic acid and urea.The farmer saved more than R 300 000.00 on 200 hectares compared to historic fertilizer application of the same fertilizers. Large enhancement was found on the plant growth as well.

### HUMIC ACID

Humic acid (C₁₈₇H₁₈₆O₈₉N₉S₁ ) and is insoluble in strong acid (pH = 1).
- A 1:1 hydrogen-to-carbon ratio indicates a significant degree of aromatic character (i.e., the presence of benzene rings in the structure), whereas a low oxygen-to-carbon ratio indicates fewer acidic functional groups than occur in fulvic acid, the other acidic organic polymer that can be extracted from humus.
- Transition and heavy metals-for example, Fe³⁺ or Pb²⁺-as well as other compounds having aromatic or hydrophobic (water-insoluble) chemical structures (i.e., organic pesticides or anthropogenic hydrocarbons), react strongly with humic acid.
- This property makes it an effective agent in sequestering many of the pollutants in terrestrial and aquatic environments.

Mixing water, pre-treated with the products has got a wetting & emulsification ability with de-agglomeration to disperse humic acid and prevent flock and agglomeration in suspensions.
- This allows for easy dispersion and application.
- Plant absorption is increased to give large growth enhancement.

### General

- Stabilizes Nitrogen and improves nitrogen efficiency.
- Facilitates the unbinding of locked up phosphate making it available for plant growth.
- A powerful fungi and micro-organism stimulant increasing soil mechanics and health.
- Enhances plant metabolism leading to powerful root systems and the formation of enzymes that increase vitamins, sugars, protein and chlorophyll & the resistance to stress.
- Increases the permeability of the cells thus increasing nutrient uptake by 40 %.
- Increase the water, oxygen and root movement within the soil.
- Has a pH buffering capacity, which will help neutralize the problems associated with Ph extremes.
- Supplies carbon needed by microbes to digest nitrogen, which limits carbon stripping from soil.
- The efficiency of Nitrogen and Potassium fertilizer's assimilation is increased by 40 to 100 times, because of increase of membrane penetration.

Humic acid is derived from coal type deposits called Leonardite and comes in a black granular form that combined with the products is easily dissolved in water and absorbed by plant leaves.

### UREA

Urea. - also called Carbamide, the diamide of carbonic acid. (H₂NCONH₂.)
- Urea has important uses as a fertilizer and feed supplement, as well as a starting material for the manufacture of plastics and drugs.
- Urea is the chief nitrogenous end product of the metabolic breakdown of proteins in all mammals and some fishes.
- In the course of the breakdown of proteins, amino groups (NH₂) are removed from the amino acids that partly comprise proteins.
   o These amino groups are converted to ammonia (NH₃), which is toxic and thus must be converted to urea.

Urea is now prepared commercially in vast amounts from liquid ammonia and liquid carbon dioxide.
- Because its nitrogen content is high and is readily converted to ammonia in the soil, urea is one of the most concentrated nitrogenous fertilizers.
- An inexpensive compound, it is incorporated in mixed fertilizers as well as being applied alone to the soil or sprayed on foliage.

Water, pre-treated with the products and mixed with urea prevents the conversion of NH2 to NH3 thus enhancing the availability and absorption of NH2 that save energy to the plant that can now be used to develop in growth.
- The chain thus remains on (NH2) which can be taken up by the plant.

Due to the lack of dispersion and absorption in not using the product, a lot of fertilizer runs down into down-stream systems.
- This is costly and has a negative effect on the environment.

By pre-treating the mixing water with the product, dispersion and absorption is increased.
- This enhances efficiency, saves on cost and becomes more environmental friendly.

### General

- Increased assimilation in the presence of the products
- Using UREA as a foliar feed, energy is not lost in conversion as the plant absorbs N directly as Na4 rather than having to converted Na2 from the soil into Na4 as a nitrate protein for assimilation.
- UREA is not leached out by rain and irrigation water as it is absorbed directly into the plant.
- UREA is fully utilized for plant growth and is not locked up for crop residue break down.

Any clean granular urea can be used as it mixes well with water in the presence of the products.

### CASE STUDY

### Conventional Urea Application

• Urea cost R 3 200/Ton or R 3.20 /Kg and thus at an application rate of 150Kg per hectare the cost is R 480 per hectare.

The Product (400 ml) + Humic Acid (2 kg) + urea (20kg) in 200 liter water per hectare costs R 136-00 per hectare.

### Process Hectares Cost Applications Cost per annum

Urea only (150 kg per hectare) R576,000.00
The Product + Humic Acid + Urea program R163,200.00

### FOLIAR FEEDING MIXING

### Mix 1

- 1.120 gram fulvic acid
- 18kg urea
- 250ml maxi boost
- 250 gram caltec
- Method comments

§ All above are per hectare
§ Fill tank with water
§ Add 0.2% of water volume the product (2ml : 1lt)
§ While circulating water slowly add the fulvic acid
§ Add balance of product

### Mix 2

- 2.600 gram humic acid
- 18kg urea
- Method comments

§ All above are per hectare
§ Fill tank with water
§ Add 0.2% of water volume the product (2ml : 1lt)
§ While circulating water slowly add balance of product

### GENERAL CLEANING

### Background of problems in the market:

- Existing wetting agents in the market are non-environmental friendly.
- They are limited in performance and cannot wet carbon, graphite or hematite.
- They create flocks and agglomeration.

### The solution presented by the product

- The replacement of Water pre-treatment and wetting, emulsification and de-agglomeration products that are harmful to the environment and have toxic characteristics.
- Presents an environmental friendly solvent, ammonia and glycol free replacement product where powerful wetting are required for cleaning and dispersion of particles into solutions or suspensions.
- The product performs extremely well and is therefore recommended as a replacement for conventional wetting agents in the market to reduce cost and increase environmental acceptance.
- The product effects large cost saving and other benefits in:
   ∘ Soap manufacturing,
   ∘ Suspensions and mixtures.
- In watery suspensions with high agitation, the product presents foaming properties.
- The product is very compatible with most Defoamer and it can be used to reduce foam.

The product presents a unique water pre-treatment to allow for all purpose cleaning.
- This product can be added to cleaning agents as an enhancement, for example by between 30% and 70%, or just added to water for any cleaning applications by itself.
- The product enhances the lifting and removal) of all kinds of non-wettable materials and dusts as well as the emulsification of oil and fat-based materials with cleaning water.
- The product allow for faster drying and leaves cleaned surfaces with an antistatic charge that prevent attraction of dust and dirt to the cleaned surface.
- The product enhances water quality by adding and increasing its ability to give wetting and emulsification during application.

Addition of the product to cleaning agents or chemicals will therefore enhance efficiency at large as wetting, emulsification and soil-suspension is increased.
- The product can be used as an additive to different domestic and industrial cleaning agents.
- The product can be used in specialized application to remove carbon, graphite or hematite dusts as well as in degreasing applications.

### Application:

- Provides additional properties to cleaning agents or cleaning
- Can replace wetting agents in liquid suspensions.

### This solves a lot of problems and difficulties.

- Dirt and unwanted materials can now be mixed with water for removal or mixing.
- Dirt do not stick to surfaces.
- Soil-suspension in cleaning water.

### DEGREASING

### Background of problems in the market:

- Existing emulsification & wetting agents in the market are non-environmental friendly.
- Water does not mix with oil or solvent-based materials.
- Dispersion of pigments and dust in emulsions and suspensions is difficult.
- Alternative products create flocks and agglomeration.

### The solution presented by the product

- Specialized engineered water manipulation treatment to give combined properties of wetting, emulsification and de-agglomeration for suspensions, emulsions and degreasers.
- The product performs very well in applications to keep fine and ultra-fine particles in suspension after milling and mixing.
- Prevention of flock and re-agglomeration prevent growth of particles and therefore prevent sagging, flooding and segregation.
- The product is recommended for lime, silica, hematite, chrome, platinum and titanium suspensions.
- The product performed very well to prevent settlement during transportation of these materials.
- Dirt and unwanted materials can now be mixed with water for removal or mixing.
- Oil-based dirt and unwanted materials can now be mixed with water for removal or mixing.
- Oil, grease or fat can now be lifted from surfaces

### Applications:

- To disperse powders and pigments into suspensions.
- To create emulsions.

### HYGIENIC CLEANING

### Background of problems in the market:

- Bacteria are surrounded by an air-pocket (cyst) and are therefore non-wettable.
- Sanitizers do not get into contact with the bacteria.
   ∘ Cream and milk crystals do not mix with water and are the habitat of bacteria.
   ∘ Milkstone, a calcium layer forms on equipment.
- This all leads to high bacteria counts.

### Our solution.

- SABS approved water pre-treatment to clean in food industry.
- A unique product to replace the use of hazardous caustic and acid chemicals.
- An effective product available that is cost effective and low dosage requirement.
- Removes non-wettable bacteria and emulsifies oil-based bacteria-habitat into cleaning water with high performance soil-suspension.
- Allow for environmental friendly biodegradable sludge dams and ponds.

### Applications:

- For cleaning in the food industry. Dairy products, Abattoirs, Fruit, Bakeries, etc.

### This solves a lot of problems and difficulties.

- Non-wettable bacteria & insects can now be wetted and removed.
- Oil-based bacteria-habitat can now be removed (milk, cream, fat, etc.).

### DUST SUPPRESSION

### Background of problems in the market:

- Fine and ultra-fine dusts do not mix with normal tap water. It floats.
- Dust are wet at the ratio 4:1 water to dust with normal water
- When these small particles are air-borne as in smoke, they do not mix with spray droplets. They will just bounce against each other and will not mix.
- The same happen to oil and solvent based materials. Vapors are air-borne solvent droplets which do not mix with water droplets.

### The solution presented by the product

- A powerful water pre-treatment that allows wetting of non-wettable carbon, graphite, sulfur, hematite and pigmenting dusts at low dosage to increase environmental acceptance and reduce costs.
- With addition to tap water, the products give wetting and emulsification properties to water by effecting a anti-static charge on the soluble salts.
- This allows for the integration of all non-wettable and oil-based materials into the water.
- The wetting ability of treated water creates a dustless powder for disposal
- Dust can now be wet in the presence of the product at a 1:1 water to dust ratio.

### Applications:

- For suppression of smoke and gasses in chimney's, stockpile dusts and dust spillage.

### This solves a lot of problems and difficulties.

- Fine & ultra-fine air-borne dusts including smoke particles can now be wetted for suppression.
- Fine & ultra-fine air-borne globules can now be emulsified into water droplets. (Gasses)
- In fire, burning floating materials are wetted, burning floating oil-based materials are emulsified, whilst smoke, vapors and gasses are suppressed

### MALARIA & CHOLERA

### Background of problems in the market:

- Bacteria are surrounded by an air-pocket (cyst) and are therefore non-wettable.
- Sanitizers do not get into contact with the bacteria.

### This solves a lot of problems and difficulties.

- Chemical enhancement can be achieved.
- Non-wettable bacteria & insects can now be wetted and be exposed to disinfectants and other control chemicals.
- Water with toxin or weed-killer gets in direct contact with the insect or leave surface.

### GENERAL INFORMATION ON DOSAGE REQUIREMENTS.

Platting on the graph was found at 0,16 %.

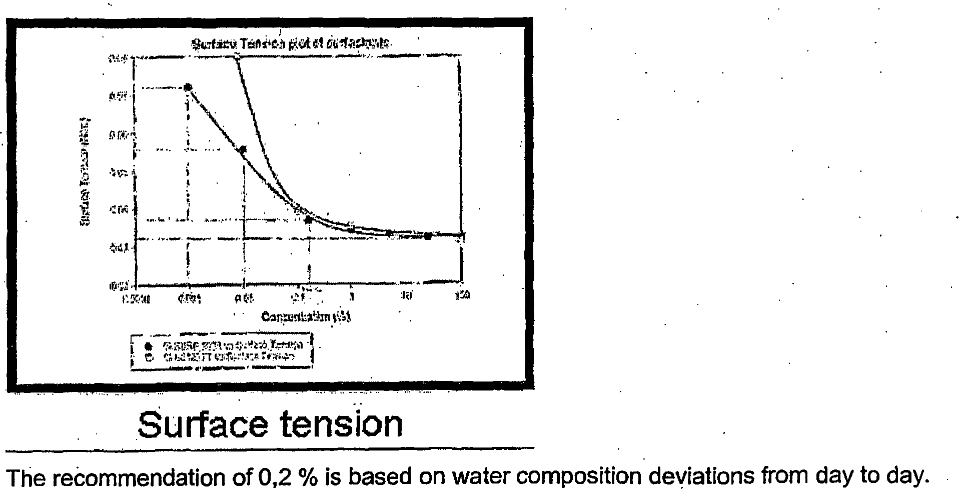

### Creating suspensions or emulsions.

Dosage requirements of between .2% to .5% will be determined by:
Type of substance added.
   Carbon pigment will require higher dosage than oxides.
Type of oil-based substance added.
   Resins will differ from other solvents.

Dosage requirements will also be effected by technique employed.
The pre-addition to a mill-base compared to post-addition to the total volume.

Dosage requirements will also be effected by application.
For cleaning and degreasing smaller dosage will be required where oil-based materials only need to be put into emulsion for limited time compared to permanent suspensions and emulsions as in paints where shelf life is needed and higher dosages will be required.

### COMPATIBILITY WITH OTHER CHEMICAL.

General enhancement of other chemicals have been found to be between 30% and 70%.

Neutralization of steric charges has shown large enhancement and increased efficiency.

Reduced surface and interfacial tension also enhance application on dry surfaces.

At pH 3 and pH 15 the product performance was stable and consistent.

At the low dosage recommendation and low percentage of ingredients in composition interaction with other chemicals could not be observed.

This allows for recommendation in typical products like Refractories where sodium is an issue.

The use with aluminum sulphate had enhances flock at large. Faster splitting with larger flocks was observed.

Further examples of applications of compositions of the invention follow in table 1 below.

**Table 1: Applications of Surface Active Ingredient Compositions of the Invention**

| **Use** | **Effect of surfactant** |
|---|---|
| **Metals** | |
| Concentration of ores | Wetting and foaming, collectors and frothers |
| Cutting and forming | Wetting, emulsification, lubrication and corrosion inhibition in rolling oils, cutting oils, lubricants, etc. |
| **Casting** | Mold release additives |
| Rust and scale removal | In pickling and electrolytic cleaning |
| Plating | Wetting and foaming in electrolytic plating |
| **Paper** | |
| Pulp treatment | Deresinification, washing |
| Paper machine | Defoaming, color leveling and dispersing |
| Calender | Wetting and leveling, coating and coloring |
| **Paint and protective coatings** | |
| Pigment preparation | Dispersing and wetting of pigment during grinding |
| Latex paints | Emulsification, dispersion of pigment, stabilize latex, retard sedimentation and pigment separation, rheology |
| **Waxes and polishes** | Emulsify waxes, stabilize emulsions, antistat |
| **Petroleum production/products** | |
| Drilling fluids | Emulsify oil, disperse solids, modify rheological properties of drilling fluids for oil and gas wells |
| **Worker of producing wells** | Emulsify and disperse sludge and sediment in cleanout of wells |
| Producing wells | De-emulsify crude petroleum, inhibit corrosion of equipment |
| Secondary recovery | In flooding operations, preferential wetting |
| Refined products | Detergent sludge dispersant and corrosion inhibitor in fuel oils crank-case oils and turbine oils |
| **Textiles** | |
| Preparation of fibers | Detergent and emulsifier in raw wool scoring; dispersant in viscose rayon spin bath; lubricant and antistat in spinning of hydrophobic filaments |
| Dyeing and printing | Wetting, penetration, solubilization, emulsification, dye leveling, detergency and dispersion |
| Finishing of textiles | Wetting and emulsification in finishing formulations, softening,lubricating and antistatic additives to finishes |
| **Agriculture** | |
| Phosphate fertilizers | Prevent caking during storage |
| Spray application | Wetting, dispersing, suspending of powdered pesticides and emulsification of pesticide solutions; promote wetting, spreading and penetration of toxicant |
| **Building and construction** | |
| Paving | Improve bond of asphalt to gravel and sand |
| Concrete | Promote air entertainment |
| **Elastomers and plastics.** | |
| Emulsion polymerization | Solubilization, emulsification of monomers |
| Foamed polymers | Introduction of air, control of cell size |
| Latex adhesive | Promote wetting, improve bond strength |
| Plastic articles | Antistatic agents |
| Plastic coating and laminating | Wetting agents |
| **Food and beverages** | |
| Food processing plants | For cleaning sanitizing |
| Fruits and vegetables | Improve removal of pesticides, and in wax coating |
| Bakery and ice cream | Solubilize flavor oils, control consistency, retard staling |
| Crystallization of sugar | Improve washing, reduce processing time |
| Cooking fat and oils | Prevent spattering due to super heat and water |
| **Industrial cleaning** | |
| Janitorial supplies | Detergents and sanitizers |
| Descaling | Wetting agents and corrosion inhibitors in acid cleaning of boiler tubes and heat exchangers |
| Soft goods | Detergents for laundry and dry cleaning |
| | Detergent and emulsifier in degreasing |
| | Promote wetting and penetration |
| | Emulsifiers in fat liquoring |
| | Promote wetting and penetration |

## Claims

1. A surface active ingredient composition, which includes a base liquid including water which has dispersed therein in percentages by volume:
Sodium Chloride - 1 to 3%
Magnesium - 1 to 2%
Calcium - 1 to 2%
Potassium - 1 to 2%
Sulphate - 1 to 2%
Carbon - 0,5 to 1%
Nitrate - 1 to 2% and
Phosphate - 1 to 2%;
wherein the sodium chloride and sodium alkyl ether sulphate are dissolved in the base liquid, with the proportion of the base liquid to sodium chloride to sodium alkyl ether sulphate being between 1 : 1 : 1,5 and 1 : 1 : 5.

2. A surface active ingredient composition as claimed in claim 1, wherein the proportion of base liquid to sodium chloride and sodium alkyl ether sulphate is in the order of 1 : 1 : 3.

3. A surface active ingredient composition as claimed in claim 1 or claim 2, wherein the base liquid is sea water.

4. A surface active ingredient composition as claimed in claim 1 or 2, wherein where the composition of sea water to be used does not fall within the defined parameters of the base liquid, the composition of the sea water is adjusted by the addition of and/or the removal of a quantity of any one of the elements of the base liquid as defined.

5. A process for manufacturing a surface active ingredient composition as claimed in any one of the preceding claims, which process includes providing the base liquid of the composition;
heating the base liquid to a temperature between 50°C and 100°C;
if required, dissolving the sodium chloride in the base liquid through high speed dispersion;
dissolving the sodium alkyl ether sulphate in the base liquid through high speed dispersion; and
allowing the composition formed to cool down.

6. A process as claimed in claim 5, wherein the base liquid is heated to a temperature between 80°C and 90°C, at which temperature the sodium chloride, if addition thereof is required, and the sodium alkyl ether sulphate is thus dissolved in the base liquid.

7. A process as claimed in claim 5 or claim 6, wherein where the base liquid of the composition being manufactured is sea water, the composition of the sea water is adjusted by the addition of and/or the removal of a quantity of any one of the elements of the base liquid as defined, in order to provide the base liquid as defined.

8. A process as claimed in any one of claims 5 to 7, wherein the surface active ingredient composition of the invention includes caustic soda in a quantity making up in the order of 0,1% of the volume of the composition manufactured, the caustic soda being mixed into the composition being manufactured through high speed dispersion.

9. A process as claimed in claim 8, wherein where caustic soda is included in the composition, following cooling down of the composition, the pH of the composition is neutralized by the addition of a suitable acid to the composition.

10. A process as claimed in any one of claims 5 to 9, wherein the product of the process is a concentrated surface active ingredient composition for use in particular applications after being suitably diluted, the concentrated composition typically forming in the order of 0,5% of a diluted composition used.

11. Use of a surface active ingredient composition as claimed in any one of claims 1 to 4, as one or more of a wetting, emulsification, and de-agglomeration agent.

12. Use as claimed in claim 11, wherein the surface active ingredient composition may be used, when suitable diluted and/or mixed with additives, in one or more of the following industries
- Metals, including ore frothing, and cutting and milling;
- Casting including rust and scale removal, and plating;
- Paper including pulp treatment, paper machine, and calendar;
- Paint and protective coatings including pigment preparation and latex paints;
- Waxes and polishes;
- Petroleum production products including drilling fluids;
- Working of producing wells including producing wells, secondary recovery, and refined products;
- Textiles including preparation of fibres, dyeing and printing, and finishing of textiles;
- Agriculture including phosphate fertilizers and spray application;
- Building and constructions including paving and concrete;
- Elastomers and plastics including emulsion polymerization, foamed polymers, latex adhesive, plastic coating and laminating, and plastic articles;
- Food and beverages including food processing plants, fruits and vegetables, bakery, ice-cream, crystallization of sugar, and fats and oils;
- Industrial cleaning including janitorial supplies, descaling, and soft goods; and
- Leather including skins, tanning, hides, and dyeing.

## Patentansprüche

1. Zusammensetzung mit oberflächenaktiven Bestandteilen, die eine Grundflüssigkeit beinhaltet, einschließlich Wasser, worin folgende Substanzen, ausgedrückt in Prozent auf Volumen bezogen, dispergiert sind:
Natriumchlorid - 1 bis 3%
Magnesium - 1 bis 2%
Kalzium - 1 bis 2%
Kalium - 1 bis 2%
Sulfat - 1 bis 2%
Kohlenstoff - 0,5 bis 1%
Nitrat - 1 bis 2% und
Phosphat - 1 bis 2%
wobei das Natriumchlorid und Natrium Alkylether Sulfat in der Grundflüssigkeit aufgelöst werden, wobei das Verhältnis der Grundflüssigkeit zu Natriumchlorid und Natrium Alkylether Sulfat zwischen 1 : 1 : 1,5 und 1 : 1 : 5 beträgt.

2. Zusammensetzung mit oberflächenaktiven Bestandteilen gemäß Anspruch 1, wobei das Verhältnis der Grundflüssigkeit zu Natriumchlorid und Natrium Alkylether Sulfat im Bereich 1 : 1 : 3 liegt.

3. Zusammensetzung mit oberflächenaktiven Bestandteilen gemäß Anspruch 1 oder Anspruch 2, wobei es sich bei der Grundflüssigkeit um Meerwasser handelt.

4. Zusammensetzung mit oberflächenaktiven Bestandteilen gemäß Anspruch 1 oder 2, wobei, wenn die einzusetzende Meerwasserzusammensetzung nicht in die vorgeschriebenen Parameter der Grundflüssigkeit fällt, die Meerwasserzusammensetzung durch Zugabe und/oder Entzug einer Menge eines beliebigen der Elemente der Grundflüssigkeit, gemäß Definition, angepasst wird.

5. Herstellungsverfahren einer Zusammensetzung mit oberflächenaktiven Bestandteilen gemäß einem der vorhergehenden Ansprüche, wobei das Verfahren das Bereitstellen der Grundflüssigkeit der Zusammensetzung beinhaltet;
Erwärmung der Grundflüssigkeit auf eine Temperatur zwischen 50ºC und 100ºC;
falls erforderlich, Auflösen des Natriumchlorids in der Grundflüssigkeit durch Hochgeschwindigkeitsdispersion;
Auflösen des Natrium Alkylether Sulfats in der Grundflüssigkeit durch Hochgeschwindigkeitsdispersion; und
Abkühlen lassen der gebildeten Zusammensetzung.

6. Verfahren gemäß Anspruch 5, wobei die Grundflüssigkeit auf eine Temperatur zwischen 80ºC und 90ºC erwärmt wird, bei welcher Temperatur das Natriumchlorid, wenn dessen Zugabe erforderlich ist, und das Natrium Alkylether Sulfat somit in der Grundflüssigkeit aufgelöst werden.

7. Verfahren gemäß Anspruch 5 oder Anspruch 6, wobei, wenn die Grundflüssigkeit der herzustellenden Zusammensetzung Meerwasser ist, die Zusammensetzung des Meerwassers durch Zugabe und/oder Entzug einer Menge eines beliebigen der genannten Elemente der Grundflüssigkeit, gemäß Definition, angepasst wird, um die Grundflüssigkeit, gemäß Definition, zu ergeben.

8. Verfahren gemäß einem der Ansprüche 5 bis 7, wobei die Zusammensetzung mit oberflächenaktiven Bestandteilen der Erfindung eine Natronlauge in einer Menge enthält, die größenordnungsmäßig 0,1% des Volumens der hergestellten Zusammensetzung ausmacht, wobei die Natronlauge der herzustellenden Zusammensetzung durch Hochgeschwindigkeitsdispersion beigemischt wird.

9. Verfahren gemäß Anspruch 8, wobei, wenn die Zusammensetzung Natronlauge enthält, nach Abkühlung der Zusammensetzung, der pH Wert der Zusammensetzung durch Zugabe einer geeigneten Säure zu letzterer neutralisiert wird.

10. Verfahren gemäß einem der Ansprüche 5 bis 9, wobei das Verfahrensprodukt eine konzentrierte Zusammensetzung mit oberflächenaktiven Bestandteilen zum Einsatz in besonderen Anwendungsgebieten nach geeigneter Verdünnung ist, wobei sich die konzentrierte Zusammensetzung normalerweise im Bereich von 0,5% einer verwendeten verdünnten Zusammensetzung bildet.

11. Verwendung einer Zusammensetzung mit oberflächenaktiven Bestandteilen gemäß einem der Ansprüche 1 bis 4 als ein oder mehrere eines Mittels zur Benetzung, zum Emulgieren und Desagglomerieren.

12. Verwendung gemäß Anspruch 11, wobei die Zusammensetzung mit oberflächenaktiven Bestandteilen in einem oder mehreren der folgenden Industrien eingesetzt werden kann, nach geeigneter Verdünnung und/oder Mischung mit Zusätzen
- Metalle, einschließlich Aufschäumung von Erz, Schneiden und Zerkleinern;
- Gießen, einschließlich Rost- und Zunderentfernung, und Plattierung;
- Papier, einschließlich Zellstoffverarbeitung, Papiermaschinen und Kalandrieren ;
- Farbe und Schutzanstriche, einschließlich Pigmentpräparation und Latexfarben;
- Wachse und Polituren;
- Erdölproduktionserzeugnisse, einschließlich Bohrflüssigkeiten;
- Betrieb von produzierenden Bohrungen, einschließlich Herstellung von Bohrungen, sekundäre Erschließung, und Raffinerieerzeugnisse;
- Textilien, einschließlich Faserzubereitung, Färben und Drucken, sowie Veredelung von Textilien;
- Landwirtschaft, einschließlich Phosphatdünger und Sprühanwendung;
- Bauwesen, einschließlich Pflastern und Beton
- Elastomere und Kunststoffe, einschließlich Emulsions-Polymerisation, geschäumte Polymere, Latexklebstoff, Kunststoffbeschichtung und Laminieren, sowie Kunststoffartikel;
- Nahrungsmittel und Getränke, einschließlich Nahrungsmittelzubereitungsanlagen, Obst und Gemüse, Backwaren, Eiscreme, Kristallisation von Zucker, sowie Fette und Öle;
- Industrielle Reinigung, einschließlich Raumpflegeartikel, Entkalkungsmittel und weiche Produkte; und
- Lederwaren, einschließlich Häute, Gerben, Felle, und Färben.

## Revendications

1. Composition d'ingrédients tensioactive qui contient un liquide de base, tel que l'eau, dans lequel sont dispersés:
Chlorure de sodium - de 1 à 3% en volume
Magnésium - de 1 à 2% en volume
Calcium - de 1 à 2% en volume
Potassium - de 1 à 2% en volume
Sulfate - de 1 à 2% en volume
Carbone - de 0,5 à 1 % en volume
Nitrate - de 1 à 2% en volume, et
Phosphate - de 1 à 2% en volume
le chlorure de sodium et l'alkyl éther sulfate de sodium étant dissous dans le liquide de base, le rapport entre le liquide de base et le chlorure de sodium et l'alkyl éther sulfate de sodium étant compris entre 1 : 1 : 1,5 et 1 : 1 : 5.

2. Composition d'ingrédients tensioactive selon la revendication 1, dans laquelle le rapport entre le liquide de base et le chlorure de sodium et l'alkyl éther sulfate de sodium est de l'ordre de 1 : 1 : 3.

3. Composition d'ingrédients tensioactive selon la revendication 1 ou la revendication 2, dans laquelle le liquide de base est de l'eau de mer.

4. Composition d'ingrédients tensioactive selon la revendication 1 ou 2, dans laquelle, lorsque la composition d'eau de mer à utiliser ne s'inscrit pas dans les paramètres définis du liquide de base, la composition de l'eau de mer est ajustée par l'ajout et/ou l'enlèvement d'une quantité d'un quelconque des éléments du liquide de base, comme défini.

5. Procédé de fabrication d'une composition d'ingrédients tensioactive selon l'une quelconque des revendications précédentes, lequel procédé consiste à fournir le liquide de base de la composition;
chauffage du liquide de base à une température comprise entre 50ºC et 100ºC;
si besoin en est, dissolution du chlorure de sodium dans le liquide de base par dispersion à grande vitesse;
dissolution de l'alkyl éther sulfate de sodium dans le liquide de base par dispersion à grande vitesse; et
permettant à la composition formée de se refroidir.

6. Procédé selon la revendication 5, dans lequel le liquide de base est chauffé à une température comprise entre 80º et 90ºC, à laquelle température le chlorure de sodium, si son ajout est nécessaire, et l'alkyl éther sulfate de sodium sont donc dissous dans le liquide de base.

7. Procédé selon la revendication 5 ou la revendication 6, dans lequel, lorsque le liquide de base de la composition à produire est de l'eau de mer, la composition de l'eau de mer est ajustée par l'ajout et/ou l'enlèvement d'une quantité d'un quelconque des éléments du liquide de base, comme défini, afin de fournir le liquide de base, comme défini.

8. Procédé selon l'une quelconque des revendications 5 à 7, dans lequel la composition d'ingrédients tensioactive selon l'invention comprend de la soude caustique dans une quantité qui constitue le volume de la composition produite de l'ordre de 0,1%, la soude caustique étant mélangée à la composition étant préparée par dispersion à grande vitesse.

9. Procédé selon la revendication 8, dans lequel, lorsque de la soude caustique est inclue dans la composition, après le refroidissement de la composition, la valeur pH de la composition est neutralisée par l'ajout à la composition d'un acide convenable.

10. Procédé selon l'une quelconque des revendications 5 à 9, dans lequel le produit du procédé est une composition concentrée d'ingrédients tensioactive pour utilisation, après dilution appropriée, dans les domaines d'applications particulières, la composition concentrée se formant normalement de l'ordre de 0,5% d'une composition diluée utilisée.

11. Utilisation d'une composition d'ingrédients tensioactive selon l'une quelconque des revendications 1 à 4 en tant qu'un seul ou de plusieurs agents de mouillage, d'émulsification et de désagglomération.

12. Utilisation selon la revendication 11, la composition d'ingrédients tensioactive pouvant être utilisée, après dilution appropriée et/ou mélange avec des additifs, dans une ou plusieurs des industries indiquées ci-après
- Métaux, y compris le moussage de minerais, le coupage et le broyage;
- Fonderie, y compris le décalaminage et le dérouillage, et le placage;
- Papier, y compris le traitement de pâtes, les machines à papier et le calandrage;
- Peintures et revêtements protecteurs, y compris la préparation de pigments et les peintures à base de latex;
- Cires et vernis;
- Produits provenant de la production de pétrole, y compris des fluides de forage;
- Opération de puits de production, y compris la fabrication de puits, la récupération secondaire; et des produits raffinés.
- Textiles, y compris la préparation de fibres, la teinture et l'impression, ainsi que l'apprêtage de textiles;
- Agriculture, y compris les engrais phosphatés et des applications par pulvérisation;
- Domaine de construction, y compris le pavage et le bétonnage;
- Élastomères et matières plastiques, y compris la polymérisation en émulsion, les polymères moussés, les adhésifs au latex, les revêtements plastiques et le laminage, ainsi que des objets en matière plastique;
- Produits alimentaires et boissons, y compris des usines de transformation de produits alimentaires, des fruits et légumes, des produits de boulangerie, des glaces, la cristallisation de sucre, ainsi que des graisses et huiles;
- Nettoyage industriel, y compris des produits d'entretien, le détartrage, et les produits mous; et
- Produits en cuir, y compris des cuirs, le tannage, des peaux et la teinture.
